# EUROPÄISCHE PATENTSCHRIFT

(11) **EP 1 072 383 B1**
(45) Veröffentlichungstag und Bekanntmachung des Hinweises auf die Patenterteilung: **17.09.2003**
(21) Anmeldenummer: 00114499.7
(22) Anmeldetag: 06.07.2000
(51) Int. Cl.: B29C 45/16, B60Q 3/04

(54) **Mehrkomponenten-Kunststoffspritzgussteil mit optischer Anzeigefunktion**
Multi-component plastic injection moulded article with optical display function
Article de matière plastique moulé par injection à plusieurs composants comprenant une fonction d'affichage optique

(30) Priorität: 26.07.1999 DE 19934951
(43) Veröffentlichungstag der Anmeldung: 31.01.2001
(73) Patentinhaber: Siemens Aktiengesellschaft, 80333 München (DE)
(72) Erfinder: Langer, Franz, 55276 Oppenheim (DE)

(56) Entgegenhaltungen:
- EP-A- 0 602 385
- EP-A- 0 703 051
- DE-A- 19 721 107
- US-A- 4 872 415
- PATENT ABSTRACTS OF JAPAN vol. 1999, no. 04, 30. April 1999 (1999-04-30) -& JP 11 023328 A (YAZAKI CORP), 29. Januar 1999 (1999-01-29)
- PATENT ABSTRACTS OF JAPAN vol. 017, no. 399 (P-1579), 26. Juli 1993 (1993-07-26) -& JP 05 072362 A (NIPPONDENSO CO LTD), 26. März 1993 (1993-03-26)
- PATENT ABSTRACTS OF JAPAN vol. 018, no. 435 (M-1655), 15. August 1994 (1994-08-15) -& JP 06 134805 A (NISSHA PRINTING CO LTD), 17. Mai 1994 (1994-05-17)

## Beschreibung

Die Erfindung betrifft ein Mehrkomponenten-Kunststoffspritzgussteil mit einer Anzeigefunktion, bestehend aus mindestens einer als Lichtleitelement ausgebildeten lichtdurchlässigen Komponente und mindestens einer lichtundurchlässigen Komponente, die direkt mit dem Lichtleitelement verbunden ist und dieses teilweise umschließt, sowie mindestens einer eine sichtbare Oberfläche des Mehrkomponenten-Kunststoffspritzgussteils bildende Kunststofffolie mit lichtdurchlässigen Bereichen, wobei die Kunststofffolie auf das Lichtleitelement materialschlüssig aufgebracht ist und zur Realisierung der Anzeigefunktion eine Lichtleitung von einer Lichteintrittsfläche des Lichtleitelements durch das Lichtleitelement zu den lichtdurchlässigen Bereichen der Kunststofffolie erfolgt. Ferner betrifft die Erfindung ein Verfahren zur Herstellung eines solchen Mehrkomponenten-Kunststoffspritzgussteils.

Ein solches Verfahren sowie auch das damit hergestellte Spritzgussteil sind aus der DE-A-44 33 580 bekannt.

In Kraftfahrzeugen finden sich vielfältige Anwendungen für Kunststoffspritzgussteile. Spritzgussteile, die zusätzliche eine optische Anzeigefunktion erfüllen, werden beispielsweise als Anzeigefelder oder als beleuchtbare Drucktasten für Tastenschalter eingesetzt. Eine beleuchtbare Drucktaste kann beispielsweise aus drei Einzelkomponenten bestehen, nämlich einer ersten lichtdurchlässigen Komponente, einer zweiten lichtundurchlässigen Komponente, die die lichtdurchlässige Komponente als Rahmen umschließt, sowie einer Dekorfolie, die auf die lichtdurchlässige Komponente aufgebracht ist. Durch eine hinter der lichtdurchlässigen Komponente angebrachte Lichtquelle kann eine Durchleuchtung erzielt werden.

Solche Drucktasten können hergestellt werden, indem die lichtdurchlässige Komponente und das Rahmenelement getrennt voneinander hergestellt und anschließend miteinander verklebt werden. Schließlich kann die Dekorfolie ebenfalls durch Kleben aufgebracht werden. Diese Herstellungsweise ist jedoch zeitaufwendig und führt auch nicht immer zu optisch befriedigenden Ergebnissen.

Mit dem aus der oben bereits genannten DE-A-4433580 bekannten Verfahren können beispielsweise solche Drucktasten als Mehrkomponenten-Kunststoffspritzgußteil automatisiert hergestellt werden. Hierzu wird in einem ersten Arbeitsgang zunächst die lichtdurchlässige Komponente als Lichtleitelement hergestellt. Danach wird eine Kunststoffolie auf eine Fläche des bis zum Erreichen der Formstabilität abgekühlten Lichtleitelements aufgebracht. In einem weiteren Schritt wird die Kunststoffolie gegen das Lichtleitelement druckbeaufschlagt und durch die Druckbeaufschlagung mit dem Lichtleitelement materialschlüssig verbunden. Anschließend wird die Folie in einem Spritzgußwerkzeug mit einem lichtundurchlässigen Material hinterspritzt, so daß das Rahmenelement gebildet wird.

Nachteilig ist bei einem auf diese Weise hergestellten Spritzgußteil jedoch, daß es von einer Lichtquelle im wesentlichen nur geradlinig durchleuchtet werden kann. Drucktasten, bei denen das Licht dagegen seitlich aus der Drucktaste austreten soll, wobei die Lichtquelle hinter der Drucktaste angeordnet ist, können auf diese Weise nicht hergestellt werden, da eine Lichtumlenkung nicht realisiert werden kann. Ähnliche Probleme können bei Anzeigefeldern für Kraftfahrzeuge auftreten, wenn beispielsweise direkt hinter dem Anzeigefeld ein Antriebselement positioniert ist.

Aus der DE-A-1972107 ist ein Anzeigeinstrument für Kraftfahrzeuge bekannt, das aus mehreren Einzelkomponenten besteht und bei dem eine Lichtumlenkung durch Reflexion erfolgt. Ein Mehrkomponenten-Kunststoffspritzgussteil kommt dort jedoch nicht zur Anwendung.

Aufgabe der Erfindung ist es, ein Mehrkomponenten-Kunststoffspritzgussteil der eingangs genannten Art derart auszubilden, dass eine größere Freiheit bei der Anordnung der Lichtaustrittsflächen und der Lichtquellen entsteht. Eine weitere Aufgabe der Erfindung ist die Angabe eines Verfahrens zur Herstellung eines solchen Mehrkomponenten-Kunststoffspritzgussteils.

Die erstgenannte Aufgabe wird durch ein Mehrkomponenten-Kunststoffspritzgussteil mit den Merkmalen des Anspruchs 1 gelöst.

Um eine Lichtumlenkung durch Totalreflexion zu erreichen, ist es erforderlich, dass das Lichtleitelement eine Oberfläche aufweist, die an ein optisch dünneres Medium angrenzt. Dies bedeutet, dass die Reflexionsfläche weder direkt von der Kunststofffolie abgedeckt noch direkt von der zweiten lichtundurchlässigen Komponente umgeben sein darf. Eine solche Reflexionsfläche wird dadurch realisiert, dass das Lichtleitelement eine Aussparung aufweist, die von der Kunststofffolie abgedeckt ist und bei dem die Reflexionsfläche eine Begrenzungsfläche der Aussparung bildet. Durch das Abdecken der Aussparung durch die Kunststofffolie wird verhindert, dass die zweite lichtundurchlässige Komponente in die Aussparung eintreten kann. Als Reflexionsfläche dient somit eine Fläche des Lichtleitelementes, die an einen luftgefüllten Raum grenzt.

Bei dem erfindungsgemäßen Spritzgussteil wird die Reflexionsfläche von einer Oberfläche gebildet, die vollständig in das Spritzgussteil integriert ist. Mit anderen Worten handelt es sich bei der Reflexionsfläche nicht um eine das Spritzgussteil nach außen hin begrenzende Oberfläche. Die vorgesehene Aussparung innerhalb des Spritzgussteiles, durch die die Reflexionsfläche gebildet wird, kann insbesondere keilförmig ausgebildet sein. Das einfallende Licht wird in der Regel etwa senkrecht zur Lichteintrittsfläche in das Lichtleitelement eintreten, jedoch sind auch andere Eintrittswinkel möglich. Auf jeden Fall muß der Winkel unter dem das Licht schließlich auf die Reflexionsfläche fällt größer sein als der Grenzwinkel für Totalreflexion, der in bekannter Weise von der Brechzahl des Lichtleitelements abhängt. Insbesondere ist vorgesehen, daß die Reflexionsfläche zu der Lichteintrittsfläche des Lichtleitelementes unter einem Winkel angeordnet ist, der größer als 30° und kleiner als 70° ist, um eine nennenswerte Lichtumlenkung zu erreichen. Besonders bevorzugt wird eine Ausführungsform, bei der die Reflexionsfläche zu der Lichteintrittsfläche unter einem Winkel von etwa 45° angeordnet ist. Hierdurch wird Licht, das senkrecht zur Lichteintrittsfläche in das Lichtleitelement eintritt, um einen Winkel von 90° abgelenkt. Im Falle einer Taste kann damit erreicht werden, daß bei Anordnung einer Lichtquelle hinter der Taste der Lichtaustritt seitlich an der Taste erfolgt.

Die Kunststoffolie, die eine sichtbare Oberfläche des Spritzgußteils darstellt, weist vorzugsweise durchleuchtbare Symbole auf und ist vorzugsweise mit dem Lichtleitelement materialschlüssig verbunden. Unter dem Begriff Symbole werden hier auch Buchstaben und Zahlen verstanden.

Die Reflexionsfläche kann in dem Lichtleitelement auch so angeordnet sein, daß ein Teil des einfallendes Lichtes geradlinig durch das Lichtleitelement hindurchgeht und ein weiterer Teil des Lichtes durch die Reflexionsfläche abgelenkt wird, so daß das einfallende Licht in zwei räumlich getrennte Teilbündel aufgeteilt wird. Hierdurch kann bei einer Taste beispielsweise eine besonders gute Erkennbarkeit unter verschiedenen Beobachtungswinkeln erreicht werden.

Vorzugsweise besteht das Lichtleitelement und/oder die lichtundurchlässige Komponente aus einem amorphen thermoplastischen Kunststoffmaterial. Besonders geeignete thermoplastische Kunststoffmaterialien sind hierbei Polymethylmethacrylat (PMMA), Polycarbonat (PC) sowie Polystyrol. Bei Verwendung dieser Materialien für die lichtundurchlässige Komponente ist vorgesehen, eingefärbtes Kunststoffmaterial zu verwenden. Insbesondere kann das Lichtleitelement auch aus einem amorphen thermoplastischen Kunststoffmaterial bestehen und die lichtundurchlässige Komponente aus einem opaken, amorphen thermoplastischen Kunststoff wie ABS (Acrylnitril-Butadien-Styrol), oder aus einem Blend wie PC/ABS bzw. PC/PBT, oder aus einem teilkristallinen Kunststoff wie PA (Polyamid) und PBT.

Ein Verfahren zur Herstellung eines solchen Mehrkomponenten-Kunststoffspritzgußteils mit einer optischen Anzeigefunktion weist die Verfahrensschritte Herstellen eines ersten Spritzgußteils aus einer ersten lichtdurchlässigen Kunststoffmasse als Lichtleitelement, Aufbringen und Verschweißen einer zumindest in Teilbereichen lichtdurchlässigen Kunststoffolie auf eine Oberfläche des Lichtleitelementes und teilweises Umspritzen des Lichtleitelements mit einer zweiten lichtundurchlässigen Kunststoffmasse in einem Spritzgußwerkzeug auf, so daß eine Lichtleitung durch das Lichtleitelement zu einer Lichtaustrittsfläche der Kunststoffolie realisierbar ist. Erfindungsgemäß ist bei einem solchen Verfahren vorgesehen, daß das Lichtleitelement eine Aussparung aufweist und die Aussparung während des Umspritzens mit der zweiten Kunststoffmasse so abgedeckt ist, daß ein Eindringen der zweiten Kunststoffmasse in die Aussparung verhindert wird, so daß eine Teilfläche des Lichtleitelements, die an die Aussparung anschließt, als Reflexionsfläche für Totalreflexion erhalten bleibt,

Das Abdecken der Aussparung wird insbesondere durch die Kunststoffolie erreicht. in einer Abwandlung des Verfahrens ist es jedoch auch möglich, daß die Aussparung des Lichtleitelements zumindest teilweise durch eine Wand des Spritzgußwerkzeugs abgedeckt wird. Wesentlich dabei ist eine ausreichend dichte Abdeckung der Aussparung, so daß ein Eindringen der zweiten Kunststoffmasse in die Aussparung sicher verhindert wird. Andemfalls würde bei Einspritzen der zweiten Kunststoffmasse diese sich auf der als Reflexionsfläche vorgesehenen Oberfläche des Lichtleitelementes niederschlagen, so daß aufgrund der gleichen oder ähnlicher Brechzahlen des Lichtleitelementes und der zweiten Kunststoffmasse eine Totalreflexion praktisch nicht mehr möglich ist.

In einer besonderen Ausführungsform ist vorgesehen, daß die Kunststoffolie gegen das Lichtleitelement druckbeaufschlagt und durch die Druckbeaufschlagung mit der Platte materialschlüssig verbunden wird. Dies kann insbesondere dadurch erreicht werden, daß das Lichtleitelement nach der Herstellung im Spritzgußverfahren bis zum Erreichen seiner Formstabilität abkühlt und die Kunststoffolie auf eine Fläche des bis zum Erreichen der Formstabilität abgekühlten Lichtleitelements aufgebracht wird.

Die Erfindung wird nachfolgend anhand der Ausführungsbeispiele und der Figuren näher erläutert. Es zeigen:
- Figur 1: ein Schnittbild durch das Lichtleitelement nach dem Anpressen an die Kunststoffolie,
- Figur 2: einen Schnitt durch ein fertiges Mehrkomponenten-Kunststoffspritzgußteil in Form einer Taste,
- Figur 3: ein Mehrkomponenten-Kunststoffspritzgußteil als Anzeigefeld in einem Kraftfahrzeug.

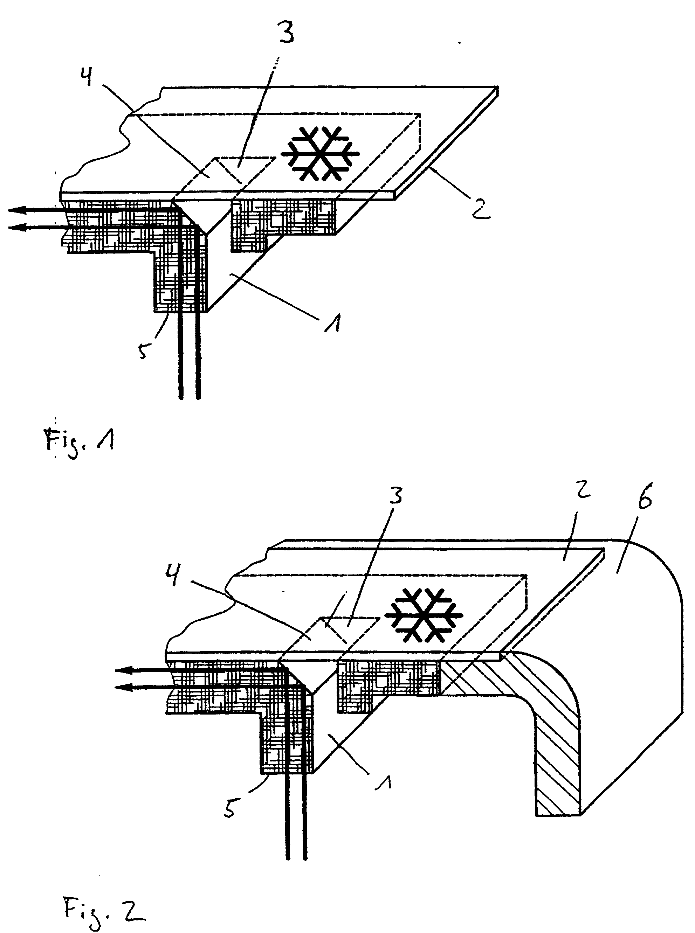

Figur 1 zeigt einen Schnitt durch das Lichtleitelement 1, das mit einer bedruckten Kunststoffolie 2 versehen ist. Das Lichtleitelement 1 wurde im Spritzgußverfahren aus einem glasklaren Kunststoffmaterial hergestellt. Das Spritzgußteil weist eine Aussparung 3 auf, die von einer Reflexionsfläche 4 begrenzt wird. Licht, das über die Lichteintrittsfläche 5 in das Lichtleitelement 1 eintritt, wird an der Reflexionsfläche 4, die unter einem Winkel von etwa 45° zur Lichteintrittsfläche 5 angeordnet ist, rechtwinklig im Lichtleitelement 1 abgelenkt. Hierzu ist es jedoch erforderlich, daß die Reflexionsfläche 4 an ein optisch dünneres Medium, insbesondere an Luft, angrenzt. Um dies auch im fertigen Bauteil zu gewährleisten, wird die Aussparung 3 durch die Kunststoffolie 2 vollständig abgedeckt. Die Kunststoffolie 2 ist deshalb mit dem Lichtleitelement materialschlüssig verbunden. Dies kann insbesondere nach dem aus der DE-A-44 33 580 bekannten Verfahren erfolgen.

Das Herstellungsverfahren besteht daher darin, daß das die Aussparung 3 aufweisende Lichtleitelement 1 zunächst im Spritzgußverfahren hergestellt wird und bis zum Erreichen einer Formstabilität abkühlt Danach wird die Kunststoffolie 2 auf eine Fläche des bis zum Erreichen der Formstabilität abgekühlten Lichtleitelements 1 aufgebracht. In einem weiteren Schritt wird anschließend die Kunststoffolie 2 gegen das Lichtleitelement 1 druckbeaufschlagt und durch die Druckbeaufschlagung mit dem Lichtleitelement 1 materialschlüssig verbunden. Das so hergestellte Teil wird anschließend in einer Spritzgußform teilweise mit einem lichtundurchlässigen Kunststoff um- bzw. hinterspritzt, so daß ein lichtdichtes Rahmenelement gebildet wird.

In Figur 2 ist ein Schnitt durch das Fertigteil dargestellt, daß in diesem Ausführungsbeispiel einen Taster zeigt. Zusätzlich zu den in der Figur 1 dargestellten Bestandteilen ist nunmehr das Rahmenelement 6 zu erkennen, das die zweite lichtundurchlässige Komponente des Mehrkomponenten-Kunststoffspritzgußteils darstellt. Die Aussparung 3, die durch die Kunststoffolie 4 abgedeckt ist, wird auch im Fertigteil von der Reflexionsfläche 4 begrenzt, die eine Grenzfläche zwischen dem Lichtleitelement 1 und der luftgefüllten Aussparung 3 darstellt. Somit liegen auch im Fertigteil die Bedingungen für Totalreflexion vor.

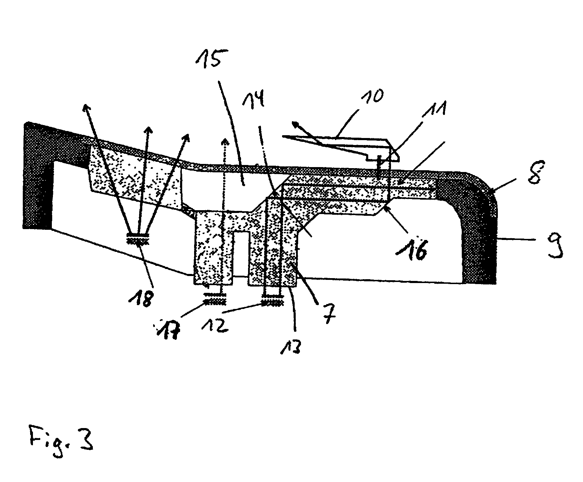

In Figur 3 ist als weiteres Ausführungsbeispiel ein Schnitt durch ein Mehrkomponenten-Kunststoffspritzgußteil dargestellt, das ein Anzeigefeld realisiert. Das Spritzgußteil besteht aus einem einstückigen Lichtleitelement 7, einer Kunststoffolie 8 und einem Rahmenelement 9. Die Herstellung dieses Spritzgußteils erfolgt gemäß dem im vorhergehenden Beispiel genannten Verfahren. Das Anzeigefeld weist darüber hinaus einen Zeiger 10 auf, der über eine Welle 11 durch einen nicht dargestellten Schrittmotor drehbar ist. Sowohl Teile der Kunststoffolie 8, auf denen Anzeigesymbole angeordnet sind, als auch der Zeiger 10 sollen beleuchtet werden. Da der Schrittmotor zum Antrieb des Zeigers 10 in der Verlängerung der Welle 11 angeordnet ist, ist die Anbringung einer Lichtquelle in der Verlängerung der Welle 11 nicht möglich. Daher ist das Lichtleitelement 7 so ausgebildet, daß es Flächen aufweist, an denen eine Totalreflexion erfolgt. Die Lichtquelle 12 ist nun an geeigneter Stelle hinter dem Lichtleitelement 7 angeordnet. Der Lichteintritt von der Lichtquelle 12 in das Lichtelement 7 erfolgt über die Lichteintrittsfläche 13. An der unter einem Winkel von etwa 45° zur Lichteintrittsfläche 13 angeordneten Reflexionsfläche 14, die eine innere Oberfläche des Spritzgußteils ist, erfolgt eine Lichtumlenkung um 90°. Die Reflexionsfläche 14 grenzt an eine Aussparung 15 des Lichtfeitelementes 7, die von der Kunststoffolie 8 abgedeckt wird. An einer weiteren Reflexionsfläche 16 erfolgt eine weitere Lichtumlenkung in den Zeiger 10. Bei der weiteren Reflexionsfläche 16 handelt es sich im Gegensatz zur Reflexionsfläche 14 um eine äußere Oberfläche des Mehrkomponentenspritzgußteils, die ohne besondere Vorkehrungen realisierbar ist.

Über weitere Lichtquellen 17, 18 erfolgt eine direkte Ausleuchtung von Anzeigesymbolen, die auf der Kunststoffolie 8 angeordnet sind.

## Patentansprüche

1. Mehrkomponenten-Kunststoffspritzgussteil mit einer Anzeigefunktion, bestehend aus mindestens einer als Lichtleitelement (1) ausgebildeten lichtdurchlässigen Komponente und mindestens einer lichtundurchlässigen Komponente, die direkt mit dem Lichtleitelement (1) verbunden ist und dieses teilweise umschließt, sowie mindestens einer eine sichtbare Oberfläche des Mehrkomponenten-Kunststoffspritzgussteils bildende Kunststofffolie (2) mit lichtdurchlässigen Bereichen, wobei die Kunststofffolie (2) auf das Lichtleitelement (1) materialschlüssig aufgebracht ist und zur Realisierung der Anzeigefunktion eine Lichtleitung von einer Lichteintrittsfläche (5) des Lichtleitelements (1) durch das Lichtleitelement (1) zu den lichtdurchlässigen Bereichen der Kunststofffolie (2) erfolgt, **dadurch gekennzeichnet, dass** das Lichtleitelement (1) eine Aussparung (3) aufweist, die von der Kunststofffolie (2) abgedeckt ist, wobei eine Oberfläche des Lichtleitelement (1) eine Begrenzungsfläche der Aussparung (3) und eine Reflexionsfläche (4) für das durch die Lichteintrittsfläche einfallende Licht bildet.

2. Kunststoffspritzgussteil nach Anspruch 1, **dadurch gekennzeichnet, dass** die Aussparung (3) keilförmig ausgebildet ist.

3. Kunststoffspritzgussteil nach einem der vorhergehenden Ansprüche, **dadurch gekennzeichnet, dass** auf der Folie (2) durchleuchtbare Symbole angeordnet sind.

4. Kunststoffspritzgussteil nach einem der vorhergehenden Ansprüche, **dadurch gekennzeichnet, dass** die Reflexionsfläche (4) zu der Lichteintrittsfläche (5) des Lichtleitelements (1) unter einem Winkel angeordnet ist, der größer als 30° und kleiner als 70° ist.

5. Kunststoffspritzgussteil nach Anspruch 4, **dadurch gekennzeichnet, dass** die Reflexionsfläche (4) zu der Lichteintrittsfläche (5) des Lichtleitelements (1 unter einem Winkel von 45° angeordnet ist.

6. Kunststoffspritzgussteil nach einem der vorhergehenden Ansprüche, **dadurch gekennzeichnet, dass** das Lichtleitelement (1) und/oder die lichtundurchlässige Komponente aus einem amorphen thermoplastischen Kunststoffmaterial besteht.

7. Kunststoffspritzgussteil nach Anspruch 6, **dadurch gekennzeichnet, dass** es sich bei dem thermoplastischen Kunststoffmaterial um Polymethylmethacrylat (PMMA), Polycarbonat (PC) oder Polystyrol handelt.

8. Kunststoffspritzgussteil nach Anspruch 7, **dadurch gekennzeichnet, dass** es sich bei der lichtundurchlässigen Komponente um ein eingefärbtes Kunststoffmaterial handelt.

9. Kunststoffspritzgussteil nach einem der vorhergehenden Ansprüche, **dadurch gekennzeichnet, dass** es sich bei dem Kunststoffspritzgussteil um ein Anzeigefeld eines Kraftfahrzeuges handelt.

10. Kunststoffspritzgussteil nach einem der vorhergehenden Ansprüche 1 bis 8, **dadurch gekennzeichnet, dass** es sich bei dem Kunststoffspritzgussteil um ein beleuchtbares Betätigungselement eines Kraftfahrzeuges handelt.

11. Verfahren zur Herstellung eines Mehrkomponenten-Kunsstoffspritzgussteils mit einer optischen Anzeigefunktion, durch Herstellen eines ersten Spritzgussteils aus einer ersten lichtdurchlässigen Kunststoffmasse als Lichtleitelement (1), Aufbringen und Verschweißen einer zumindest in Teilbereichen lichtdurchlässigen Kunststofffolie (2) auf eine Oberfläche des Lichtleitelements (1) und teilweises Umspritzen des Lichtleitelements (1) mit einer zweiten lichtundurchlässigen Kunststoffmasse in einem Spritzgusswerkzeug, so dass eine Lichtleitung von einer Lichteintrittsfläche (5) des Lichtleitelements (1) durch das Lichtleitelement (1) zu den lichtdurchlässigen Bereichen der Kunststofffolie (2) realisierbar ist, **dadurch gekennzeichnet, dass** das Lichtleitelement (1) eine Aussparung (3) aufweist und die Aussparung (3) während des Umspritzens mit der zweiten Kunststoffmasse so abgedeckt ist, *dass* ein Eindringen der zweiten Kunststoffmasse in die Aussparung (3) verhindert wird, so dass eine Teilfläche des Lichtleitelements (1), die an die Aussparung (3) anschließt, als Reflexionsfläche (4) für Totalreflexion erhalten bleibt.

12. Verfahren nach Anspruch **dadurch gekennzeichnet, dass** die Aussparung (3) des Lichtleitelements (1) durch die Kunststofffolie (2) abgedeckt wird.

13. Verfahren nach Anspruch 11 oder 12, **dadurch gekennzeichnet, dass** die Aussparung (3) des Lichtleitelements (1) zumindest teilweise durch eine Wand des Spritzgusswerkzeugs abgedeckt wird.

14. Verfahren nach einem der vorhergehenden Ansprüche 11 bis 13, **dadurch gekennzeichnet, dass** amorphe thermoplastische Kunststoffmassen verwendet werden.

15. Verfahren nach Anspruch 14, **dadurch gekennzeichnet, dass** als Kunststoffmassen Polymethylacrylat (PMMA), Polycarbonat (PC) oder Polystyrol verwendet werden.

16. Verfahren nach einem der vorhergehenden Ansprüche 11 bis 15, **dadurch gekennzeichnet, dass** zum Herstellen des Lichtleitelements (1) ein amorphes thermoplastisches Kunststoffmaterial und zum Umspritzen des Lichtleitelements (1) ein opakes amorphes thermoplastisches Kunststoffmaterial oder ein Blend verwendet wird.

17. Verfahren nach einem der vorhergehenden Ansprüche 11 bis 15, **dadurch gekennzeichnet, dass** zur Herstellung des Lichtleitelements (1) ein amorphes thermoplastisches Kunststoffmaterial und zum Umspritzen des Lichtleitelements (1) ein teilkristallines Kunststoffmaterial verwendet wird.

18. Verfahren nach einem der vorhergehenden Ansprüche 11 bis 17, **dadurch gekennzeichnet, dass** die Kunststofffolie (2) gegen das Lichtleitelement (1) druckbeaufschlagt und durch die Druckbeaufschlagung mit der Platte materialschlüssig verbunden wird.

19. Verfahren nach Anspruch 18, **dadurch gekennzeichnet, dass** das Lichtleitelement (1) nach der Herstellung im Spritzgussverfahren bis zum Erreichen seiner Formstabilität abkühlt und die Kunststofffolie (2) auf eine Fläche des bis zum Erreichen der Formstabilität abgekühlten Lichtleitelements (1) aufgebracht wird.

## Claims

1. Multi-component plastic injection-moulded part with a display function, comprising at least one translucent component formed as a light-guiding element (1) and at least one non-translucent component, which is directly connected to the light-guiding element (1) and partly encloses it, and also at least one film of plastic (2) with translucent regions, which forms a visible surface of the multi-component plastic injection-moulded part, the film of plastic (2) having been applied to the light-guiding element (1) in an integrally bonding manner and, to realize the display function, light being guided from a light-entering area (5) of the light-guiding element (1) through the light-guiding element (1) to the translucent regions of the plastic film (2), **characterized in that** the light-guiding element (1) has a clearance (3) which is covered by the film of plastic (2), a surface of the light-guiding element (1) forming a bounding area of the clearance (3) and a reflection area (4) for the light falling through the light-entering area.

2. Plastic injection-moulded part according to Claim 1, **characterized in that** the clearance (3) is formed in a wedge-shaped manner.

3. Plastic injection-moulded part according to one of the preceding claims, **characterized in that** illuminated symbols are arranged on the film (2).

4. Plastic injection-moulded part according to one of the preceding claims, **characterized in that** the reflection area (4) is arranged in relation to the light-entering area (5) of the light-guiding element (1) at an angle which is greater than 30° and less than 70°.

5. Plastic injection-moulded part according to Claim 4, **characterized in that** the reflection area (4) is arranged in relation to the light-entering area (5) of the light-guiding element (1) at an angle of 45°.

6. Plastic injection-moulded part according to one of the preceding claims, **characterized in that** the light-guiding element (1) and/or the non-translucent component consists of an amorphous thermoplastic material.

7. Plastic injection-moulded part according to Claim 6, **characterized in that** the thermoplastic material is polymethyl methacrylate (PMMA), polycarbonate (PC) or polystyrene.

8. Plastic injection-moulded part according to Claim 7, **characterized in that** the non-translucent component is a coloured moulding material.

9. Plastic injection-moulded part according to one of the preceding claims, **characterized in that** the plastic injection-moulded part is a display zone of a motor vehicle.

10. Plastic injection-moulded part according to one of the preceding Claims 1 to 8, **characterized in that** the plastic injection-moulded part is an illuminated actuating element of a motor vehicle.

11. Method of producing a multi-component plastic injection-moulded part with an optical display function by producing a first injection-moulded part from a first translucent moulding compound as a light-guiding element (1), applying and fusing a film of plastic (2) which is translucent at least in subregions onto a surface of the light-guiding element (1) and partly encapsulating the light-guiding element (1) with a second, non-translucent moulding compound in an injection mould, so that light guiding from a light-entering area (5) of the light-guiding element (1) through the light-guiding element (1) to the translucent regions of the film of plastic (2) can be realized, **characterized in that** the light-guiding element (1) has a clearance (3) and the clearance (3) is covered during the encapsulation with the second moulding compound in such a way that penetration of the second moulding compound into the clearance (3) is prevented, so that a subarea of the light-guiding element (1) which adjoins the clearance (3) is retained as a reflection area (4) for total reflection.

12. Method according to Claim 11, **characterized in that** the clearance (3) of the light-guiding element (1) is covered by the film of plastic (2).

13. Method according to Claim 11 or 12, **characterized in that** the clearance (3) of the light-guiding element (1) is covered at least partly by a wall of the injection mould.

14. Method according to one of the preceding Claims 11 to 13, **characterized in that** amorphous thermoplastic moulding compounds are used.

15. Method according to Claim 14, **characterized in that** polymethyl methacrylate (PMMA), polycarbonate (PC) or polystyrene are used as moulding compounds.

16. Method according to one of the preceding Claims 11 to 15, **characterized in that** an amorphous thermoplastic moulding material is used for producing the light-guiding element (1) and an opaque amorphous thermoplastic moulding material or a blend is used for encapsulating the light-guiding element (1).

17. Method according to one of the preceding Claims 11 to 15, **characterized in that** an amorphous thermoplastic moulding material is used for producing the light-guiding element (1) and a semicrystalline moulding material is used for encapsulating the light-guiding element (1).

18. Method according to one of the preceding Claims 11 to 17, **characterized in that** the film of plastic (2) is pressed against the light-guiding element (1) and integrally bonded with the sheet by the applied pressure.

19. Method according to Claim 18, **characterized in that** the light-guiding element (1) is cooled after production in the injection-moulding process until its dimensional stability is reached and the film of plastic (2) is applied to an area of the light-guiding element (1) which has been cooled until dimensional stability is reached.

## Revendications

1. Pièce à plusieurs éléments en matière plastique moulée par injection dotée d'une fonction d'indication, constituée d'au moins un élément transparent conformé comme un élément photoconducteur (1) et d'au moins un élément opaque qui est relié directement à l'élément photoconducteur (1) et entoure partiellement celui-ci, ainsi que d'au moins une feuille de matière plastique (2) constituant une face visible de la pièce à plusieurs éléments en matière plastique moulée par injection, comportant plusieurs zones transparentes, dans laquelle la feuille de matière plastique (2) est solidarisée avec l'élément photoconducteur (1) et, pour remplir la fonction d'indication, une ligne de lumière est réalisée d'une surface d'entrée de lumière (5) de l'élément photoconducteur (1) aux zones transparentes de la feuille de matière plastique (2) via l'élément photoconducteur (1), **caractérisée en ce que** l'élément photoconducteur (1) présente un évidement (3) qui est recouvert par la feuille de matière plastique (2), une surface de l'élément photoconducteur (1) constituant une surface de délimitation de l'évidement (3) et une surface de réflexion (4) pour la lumière entrant par la surface d'entrée de lumière.

2. Pièce en matière plastique moulée par injection selon la revendication 1, **caractérisée en ce que** l'évidement (3) est configuré en forme de coin.

3. Pièce en matière plastique moulée par injection selon une des revendications précédentes, **caractérisée en ce que** des symboles éclairables par transparence sont disposés sur la feuille (2).

4. Pièce en matière plastique moulée par injection selon une des revendications précédentes, **caractérisée en ce que** la surface de réflexion (4) est disposée par rapport à la surface d'entrée de lumière (5) de l'élément photoconducteur (1) sous un angle qui est supérieur à 30° et inférieur à 70°.

5. Pièce en matière plastique moulée par injection selon la revendication 4, **caractérisée en ce que** la surface de réflexion (4) est disposée par rapport à la surface d'entrée de lumière (5) de l'élément photoconducteur (1) sous un angle de 45°.

6. Pièce en matière plastique moulée par injection selon une des revendications précédentes, **caractérisée en ce que** l'élément photoconducteur (1) et/ou l'élément opaque sont constitués d'une matière thermoplastique amorphe.

7. Pièce en matière plastique moulée par injection selon la revendication 6, **caractérisée en ce que** la matière thermoplastique amorphe est du polyméthacrylate de méthyle (PMMA), du polycarbonate (PC) ou du polystyrène.

8. Pièce en matière plastique moulée par injection selon la revendication 7, **caractérisée en ce qu'**il s'agit pour l'élément opaque d'une matière plastique colorée.

9. Pièce en matière plastique moulée par injection selon une des revendications précédentes, **caractérisée en ce que** la pièce en matière plastique moulée par injection est un panneau d'affichage d'un véhicule automobile.

10. Pièce en matière plastique moulée par injection selon une des revendications précédentes 1 à 8, **caractérisée en ce que** la pièce en matière plastique moulée par injection est un élément de commande éctairable d'un véhicule automobile.

11. Procédé pour la fabrication d'une pièce à plusieurs éléments en matière plastique moulée par injection dotée d'une fonction d'indication, par la fabrication d'une première pièce moulée par injection à partir d'une première masse plastique transparente en tant qu'élément photoconducteur (1), l'application et le soudage d'une feuille de matière plastique (2) transparente au moins dans des zones partielles sur une surface de l'élément photoconducteur (1) et le recouvrement partiel par injection de l'élément photoconducteur (1) avec une deuxième masse plastique opaque dans un moule pour injection, de sorte qu'une ligne de lumière peut être obtenue à travers l'élément photoconducteur (1) d'une surface d'entrée de lumière (5) de l'élément photoconducteur (1) jusqu'aux zones transparentes de la feuille de matière plastique (2), **caractérisé en ce que** l'élément photoconducteur (1) présente un évidement (3) et que l'évidement (3) est recouvert par la deuxième masse plastique lors du recouvrement par injection, de sorte qu'une pénétration de la deuxième masse plastique dans l'évidement (3) est empêchée, afin qu'une surface partielle de l'élément photoconducteur (1) qui est contiguë à l'évidement (3) soit conservée comme surface de réflexion (4) pour la réflexion totale.

12. Procédé selon la revendication 11, **caractérisé en ce que** l'évidement (3) de l'évidement photoconducteur (1) est recouvert par la feuille de matière plastique (2).

13. Procédé selon la revendication 11 ou 12, **caractérisé en ce que** l'évidement (3) de l'évidement photoconducteur (1) est recouvert au moins partiellement par une paroi du moule pour injection.

14. Procédé selon une des revendications précédentes 11 à 13, **caractérisé en ce que** des masses de matière thermoplastique amorphe sont utilisées.

15. Procédé selon la revendication 14, **caractérisé en ce que** du polyméthacrylate de méthyle (PMMA), du polycarbonate (PC) ou du polystyrène sont utilisés en guise de masses de matière plastique.

16. Procédé selon une des revendications précédentes 11 à 15, **caractérisé en ce que** pour la fabrication de l'élément photoconducteur (1 ) est utilisée une matière thermoplastique amorphe et pour le recouvrement par injection de l'élément photoconducteur (1) une matière thermoplastique amorphe opaque ou un mélange.

17. Procédé selon une des revendications précédentes 11 à 15, **caractérisé en ce que** pour la fabrication de l'élément photoconducteur (1) est utilisée une matière thermoplastique amorphe et pour le recouvrement par injection de l'élément photoconducteur (1) une matière plastique semi-cristalline.

18. Procédé selon une des revendications précédentes 11 à 17, **caractérisé en ce que** la feuille de matière plastique (2) est pressée contre l'élément photoconducteur (1) et solidarisée avec la plaque par la compression.

19. Procédé selon la revendication 18, **caractérisé en ce que** l'élément photoconducteur (1) refroidit après la fabrication par le procédé de moulage par injection jusqu'à devenir indéformable et que la feuille de matière plastique (2) est appliquée sur une surface de l'élément photoconducteur (1) refroidi jusqu'à devenir indéformable.
